# EUROPÄISCHE PATENTSCHRIFT

(11) **EP 3 256 310 B1**
(45) Veröffentlichungstag und Bekanntmachung des Hinweises auf die Patenterteilung: **28.10.2020**
(21) Anmeldenummer: 15804820.7
(22) Anmeldetag: 07.12.2015
(51) Int. Cl.: B29D 30/06, B29C 33/38, B29C 33/42, B22F 3/105, B22F 5/00, B33Y 10/00, B33Y 80/00

(54) **LAMELLE, DIE DURCH SELEKTIVES-LASER-MELTING (SLM) HERGESTELLT IST**
FIN PRODUCED BY SELECTIVE LASER MELTING (SLM)
LAMELLE FABRIQUÉE PAR FUSION SÉLECTIVE PAR LASER

(30) Priorität: 10.02.2015 DE 102015202328
(43) Veröffentlichungstag der Anmeldung: 20.12.2017
(73) Patentinhaber: Continental Reifen Deutschland GmbH, 30165 Hannover (DE)
(72) Erfinder: BEHR, Ulrich, 30167 Hannover (DE); GLÄSER, Björn-Birk, Fort Mill, NC 29707 (US); MENENDEZ-ORMAZA, Blanca, 30449 Hannover (DE); SCHÜRMANN, Oliver, 30855 Langenhagen (DE); NETTE, Daniel, 30890 Barsinghausen (DE); DOMSCHEIT, Andreas, 30459 Hannover (DE)
(74) Vertreter: Finger, Karsten
(86) Internationale Anmeldenummer: PCT/EP2015/078745
(87) Internationale Veröffentlichungsnummer: WO 2016/128087

(56) Entgegenhaltungen:
- EP-A1- 1 652 644
- WO-A1-2010/132052
- WO-A1-2010/144090
- WO-A1-2011/161248
- DE-A1-102012 102 322
- KR-A- 20130 093 701
- US-A1- 2011 309 230
- US-A1- 2013 014 873

## Beschreibung

Die Erfindung betrifft eine Lamelle, welche in einem Laufstreifensegment einer Vulkanisationsform zum Vulkanisieren eines Fahrzeugluftreifens befestigt wird und zumindest einen Einschnitt im Laufstreifen des Fahrzeugluftreifens ausformt, wobei die Lamelle einen Basisteil mit einem Teil, welcher in das Laufstreifensegment eingesetzt wird, und mit einem Teil, der vom Laufstreifensegment nach innen in radialer Richtung abragt, beim Einformen des Rohreifens in die Vulkanisationsform in den Laufstreifen eindringt und durch seine Gestalt die Ausgestaltung des Einschnittes im Laufstreifen des Reifens bestimmt, aufweist und wobei die Lamelle eine Dicke von 0,5 mm bis 1,5 mm aufweist und durch Selektives-Laser-Melting aus einem Metallpulver hergestellt ist.

Vulkanisationsformen für Fahrzeugluftreifen weisen üblicherweise Seitenwandschalen und einen Laufstreifensegmentring, welcher aus mehreren, beispielsweise sieben bis zehn, Laustreifensegmenten zusammengesetzt ist, auf. Zum Öffnen und Schließen der Vulkanisationsform sind die Laufstreifensegmente in radialer Richtung bewegbar. Die bekannten Vulkanisationsformen sind Gussformen aus Metall, beispielsweise aus einer Aluminiumlegierung, wobei beim Gussvorgang jene Erhebungen, Stege und dergleichen mitgeformt werden, die bei der Vulkanisation eines Reifens Nuten, Rillen und dergleichen im Laufstreifen ausformen. Zum Ausformen von Einschnitten, die beispielsweise eine Breite von 0,4 mm bis 1,0 mm aufweisen, werden Stahlblechlamellen verwendet, welche entsprechend der gewünschten Ausführung der Einschnitte im Laufstreifen gestanzt, geprägt und gebogen werden und dann in das Laufstreifensegment eingesetzt werden. Gestanzten Stahlblechlamellen sind hinsichtlich der Formgebung Grenzen gesetzt, sodass bestimmte Ausgestaltungen nicht herstellbar sind und wünschenswerte Anpassungen der Ausgestaltung und Anordnung von Einschnitten in den Profilpositiven, beispielsweise in Profilblöcken, des Laufstreifens, etwa hinsichtlich der Beeinflussung der Materialverteilung, der Reifengleichförmigkeit und der Geräuschentwicklung, nicht möglich sind.
Eine Lamelle der eingangs genannten Art ist aus der DE 10 2012 102322 A1 bekannt. Die WO 2011/161248 A1 offenbart eine weiter durch selektives Laserschmelzen hergestellte Lamelle mit einem Verankerungsteil, mittels welchem die Lamelle in der Vulkanisationsform verankert wird, und einem Formgebungsteil, welcher zum Formen mindestens eines Einschnittes im Laufstreifen konfiguriert ist. Die Lamelle ist im Bereich des Verankerungsteils verstärkt, beispielsweise dicker ausgeführt als im Formgebungsteil. Die US 2013/014873 A1 befasst sich mit einem Nutzfahrzeugreifen mit im Laufstreifen ausgebildeten "versteckten" Einschnitten oder Laufstreifenblöcken, die bei zunehmendem Abrieb des Laufstreifens zum Vorschein kommen. Solche versteckten Laufstreifenblöcke können gemäß einer Ausführung durch speziell gestaltete Lamellen erzeugt werden. Eine solche Lamelle hat im Querschnitt eine Y-Form mit zwei unter einem spitzen Winkel verlaufenden Lamellenabschnitten, die im Laufstreifen die versteckten Blöcke mitausbilden. Erwähnt ist, dass solche Lamellen durch eine Laser-Sinter-Technologie hergestellt werden können. Aus der WO 2010/144090 A1 sind Lamellen zum Ausformen von Einschnitten im Laufstreifen eines Fahrzeugreifens bekannt, welche im Querschnitt ebenfalls Y-förmig ausgestaltet sind, sodass der von einer solchen Lamelle im Laufstreifen gebildete Einschnitt, beginnend bei der Laufstreifenperipherie, vorerst einen in radialer Richtung verlaufenden Einschnittabschnitt aufweist, von welchem in einer bestimmten Einschnitttiefe zwei Einschnittabschnitte gabelförmig abzweigen. Die Anmeldeschrift EP 1 652 644 A1 offenbart einen Lammellenkörper, der durch Lasersintern von Pulvermaterial hergestellt wird und der einen Widerhaken an einem Ende des Körpers aufweist.

Der Erfindung liegt die Aufgabe zu Grunde, Lamellen zur Verfügung zu stellen, welche derart ausgeführt sind, sodass die mit ihnen geformten Einschnitte im Laufstreifen in erwünschter Weise bestimmte, erwünschte Laufstreifen- bzw. Reifeneigenschaften beeinflussen, verbessern und/oder optimieren können. Darüber hinaus soll es möglich sein, die Lamellen mit variierender Dicke herstellen zu können.

Gelöst wird die gestellte Aufgabe erfindungsgemäß dadurch, dass sie zumindest einen Lamellenteil aufweist, welcher vom Basisteil der Lamelle unter Bildung einer Kreuzung abragt.

Die mittels der Selektiven-Laser-Melting-Technologie hergestellte Lamelle weist eine dreidimensionale Ausgestaltung mit einander kreuzenden Lamellenteilen auf, sodass die Lamelle zumindest einen Lamellenteil aufweist, welcher von einem Basisteil der Lamelle unter Bildung einer Kreuzung abragt oder zumindest ein Paar von Lamellenteilen aufweist, welches mit dem Basisteil eine Kreuzung bildet. Die Lamelle kann ferner eine über ihre radiale Erstreckung variierende Dicke aufweisen und mit beliebig gestalteten Erhebungen, Vertiefungen und dergleichen hergestellt werden. Durch die Erfindung wird daher die Möglichkeit eröffnet, Einschnitte in Reifen derart auszuführen und anzuordnen, dass insbesondere die Reifengleichförmigkeit, die Geräuschentwicklung beim Abrollen, der Laufstreifenabrieb, das Traktions- und Bremsverhalten und dergleichen verbessert bzw. optimiert sind.

Die Erfindung basiert daher auf eine besonders vorteilhafte und innovative Verwendung der Selektiven-Laser-Melting-Technologie, nämlich zur Herstellung einer Lamelle, welche in einem Laufstreifensegment einer Vulkanisationsform zum Vulkanisieren eines Fahrzeugluftreifens befestigt wird, zumindest einen Einschnitt im Laufstreifen des Fahrzeugluftreifens ausformt und eine Dicke von 0,5 mm bis 1,5 mm aufweist. Weitere Merkmale, Vorteile und Einzelheiten der Erfindung werden nun anhand der Zeichnung, die ein Ausführungsbeispiel darstellt, näher beschrieben. Dabei zeigt

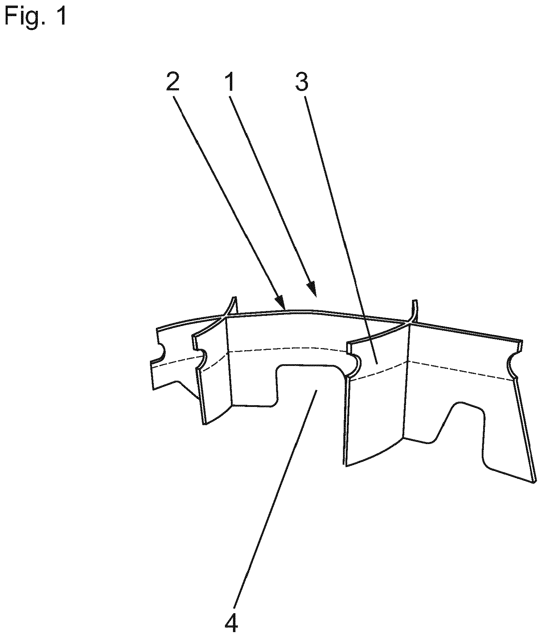

Fig. 1 eine Ansicht einer Ausführungsform einer Lamelle zur Bildung von Einschnitten geringer Breite im Laufstreifen eines Fahrzeugluftreifens.

Fahrzeugluftreifen weisen üblicherweise profilierte Laufstreifen mit durch Rillen, insbesondere Umfangsrillen, Querrillen, Schrägrillen und dergleichen, gebildete Profilpositive auf, welche beispielsweise in Form von Profilbändern oder Profilblockreihen über den Umfangs des Laufstreifens verlaufen. Es ist ferner üblich, in den Profilpositiven - Profilbändern oder Profilblöcken - zusätzlich Einschnitte, die eine Breite von beispielsweise 0,5 mm bis 1,5 mm aufweisen, auszubilden, wobei Sommerreifen im Allgemeinen eine eher geringe Anzahl von Einschnitten aufweisen, Winterreifen hingegen mit einer Vielzahl von Einschnitten versehen werden. Die geometrische Ausgestaltung dieser Einschnitte wirkt sich auf unterschiedliche Reifeneigenschaften bzw. Fahreigenschaften des Reifens aus, beispielsweise auf die Umfangs- und Quersteifigkeit, die Stabilität der Profilpositive, die Abriebseigenschaften, die Geräuschentwicklung beim Abrollen, die Tire Uniformity, die Hochgeschwindigkeitseignung, die Brems- und Traktionseigenschaften und dergleichen. Einschnitten wird daher, in Draufsicht betrachtet, beispielsweise ein wellen- oder zickzackförmiger Verlauf verliehen und es ist bekannt, im Profil bzw. im Gummimaterial Einschnitte mit Einschnittwänden auszubilden, die eine Vielzahl von besonders geformten Vorsprüngen, Vertiefungen und dergleichen aufweisen.

Die Einschnitte werden durch entsprechend gestaltete metallische Lamellen während der Vulkanisation des Fahrzeugluftreifens in einer Vulkanisationsform erzeugt. In Vulkanisationsformen wird der Laufstreifen üblicherweise durch über den Formumfang einen Formsegmentring bildende Laufstreifensegmente, die bei geschlossener Form unmittelbar aneinander anschließen, ausgebildet, wobei die die Einschnitte ausformenden Lamellen gesondert hergestellt sind und in an der Innenseite der Laufstreifensegmente ausgebildete Schlitze eingesetzt und verankert werden. Die Laufstreifensegmente selbst sind üblicherweise durch Gießen aus einem verhältnismäßig niedrigschmelzenden Metall, beispielsweise einer Aluminiumlegierung, hergestellt.

Gemäß der Erfindung sind die Lamellen nach dem bekannten Verfahren des Selektiven-Laser-Melting (SLM) hergestellt. Mit diesem Verfahren lassen sich Bauteile aus verschiedenen Materialien in unterschiedlichen dreidimensionalen Ausgestaltungen schnell und präzise herstellen. Zur Herstellung von Lamellen wird Metallpulver, beispielsweise Maraging-Pulver, vollständig aufgeschmolzen, sodass die hergestellten Lamellen so gut wie keine Fehlstellen aufweisen und sich daher analog zu den üblichen Stahlblechlamellen verwenden lassen. Die Generierung der Schichtdicken erfolgt aus 3D-Daten, beispielsweise unter Verwendung von CAD-Systemen, also per Software. Mit der SLM-Technologie können beliebig dreidimensional gestaltete Lamellen hergestellt werden.

Fig. 1 zeigt ein Beispiel einer mittels der SLM-Technologie herstellbaren Lamelle 1. Die Lamelle 1 weist einen leicht bogenförmig verlaufenden Basisteil 2 und zwei Paare von Lamellenteilen 3 auf, welche vom Basisteil 2 unter einem Winkel von etwa 90° abgehen. Jeweils zwei Lamellenteile 3 treffen an einer gemeinsamen Kreuzungsstelle des Basisteils 2 aufeinander. Bei der gezeigten Ausführung verlaufen ferner die Lamellenteile 3 leicht bogenförmig. Die gestrichelte Linie durch die Lamellenteile 3 und den Basisteil 2 der Lamelle 1 kennzeichnet die Grenzlinie zwischen jenem, hier dem oberen, Teil der Lamelle 1, welcher in das Laufstreifensegment eingesetzt wird, und jenem, hier dem unteren, Teil der Lamelle 1, der vom Laufstreifensegment nach innen in radialer Richtung abragt, beim Einformen des Rohreifens in die Vulkanisationsform in den Laufstreifen eindringt und durch seine Gestalt die Ausgestaltung des Einschnittes im Laufstreifen des Reifens bestimmt. Bei der gezeigten Ausführung weist ferner der Basisteil 2 in jenem Bereich, der den Einschnitt ausformt, Ausnehmungen 4 auf, die im Laufstreifen, wie an sich bekannt, Abschnitte im jeweiligen Einschnittverlauf bilden, in welchen der Einschnitt eine geringere Tiefe aufweist.

Mit der SLM-Technologie lassen sich selbstverständlich auch Lamellen formen, die in beliebiger Weise mit Vorsprüngen oder Vertiefungen an einer Seite oder an beiden Seiten versehen sind.

Der besondere Vorteil der Anwendung der SLM-Technologie zur Herstellung von Einschnitte im Laufstreifen formenden Lamellen besteht darin, dass durch die freie Wahl der Formgebung die Einschnitte im Reifen derart ausgebildet werden können, dass insbesondere eine vorteilhafte Materialverteilung bzw. Verteilung des Gummimaterials in den Profilpositiven erzielbar ist und vorteilhafte Auswirkungen auf die Anordnung und Ausführung der Einschnitte hinsichtlich Reifengleichförmigkeit und Geräuschentwicklung möglich sind. Eine gleichmäßige Materialverteilung in den Profilpositiven unterstützt einen gleichmäßigen Abrieb des Laufstreifens. Darüber hinaus besteht die Möglichkeit, auch die Dicke der Lamellen in radialer Richtung, insbesondere auch in einzelnen Abschnitten oder Teilbereichen, zu variieren. Auch diese Maßnahme eröffnet eine Vielzahl von Möglichkeiten, bestimmte Laufstreifeneigenschaften bzw. Reifeneigenschaften vorteilhaft zu beeinflussen.

### Bezugsziffernliste

- 1..................: Lamelle
- 2..................: Basisteil
- 3..................: Lamellenteil
- 4..................: Ausnehmung

## Patentansprüche

1. Lamelle (1), welche in einem Laufstreifensegment einer Vulkanisationsform zum Vulkanisieren eines Fahrzeugluftreifens befestigt wird und zumindest einen Einschnitt im Laufstreifen des Fahrzeugluftreifens ausformt, wobei die Lamelle (1) einen Basisteil (2) mit einem Teil, welcher in das Laufstreifensegment eingesetzt wird, und mit einem Teil, der vom Laufstreifensegment nach innen in radialer Richtung abragt, beim Einformen des Rohreifens in die Vulkanisationsform in den Laufstreifen eindringt und durch seine Gestalt die Ausgestaltung des Einschnittes im Laufstreifen des Reifens bestimmt, aufweist und wobei die Lamelle (1) eine Dicke von 0,5 mm bis 1,5 mm aufweist und durch Selektives-Laser-Melting aus einem Metallpulver hergestellt ist,
**dadurch gekennzeichnet,**
**dass** sie zumindest einen Lamellenteil (3) aufweist, welcher vom Basisteil (2) der Lamelle (1) unter Bildung einer Kreuzung abragt.

2. Lamelle (1) nach Anspruch 1, **dadurch gekennzeichnet, dass** sie zumindest ein Paar von Lamellenteilen (3) aufweist, welches mit dem Basisteil (2) eine Kreuzung bildet.

3. Lamelle (1) nach Anspruch 1 oder 2, **dadurch gekennzeichnet, dass** sie eine variierende Dicke aufweist.

## Claims

1. Fin (1), which is fastened in a tread segment of a vulcanizing mould for vulcanizing a pneumatic vehicle tyre and forms at least one sipe in the tread of the pneumatic vehicle tyre, wherein the fin (1) has a base part (2) with a part which is inserted into the tread segment and with a part which protrudes from the tread segment inwardly in the radial direction, penetrates into the tread when moulding the green tyre into the vulcanizing mould and determines by its shape the design of the sipe in the tread of the tyre, and the fin (1) having a thickness of 0.5 mm to 1.5 mm and being produced from a metal powder by selective laser melting,
**characterized**
**in that** it has at least one fin part (3), which protrudes from the base part (2) of the fin (1) to form a crossing.

2. Fin (1) according to Claim 1, **characterized in that** it has at least one pair of fin parts (3), which with the base part (2) forms a crossing.

3. Fin (1) according to Claim 1 or 2, **characterized in that** it has a varying thickness.

## Revendications

1. Lamelle (1), qui est fixée dans un segment de bande de roulement d'un moule de vulcanisation pour vulcaniser un pneumatique de véhicule et qui forme au moins une entaille dans la bande de roulement du pneumatique de véhicule, la lamelle (1) présentant une partie de base (2) avec une partie qui est insérée dans le segment de bande de roulement et avec une partie qui fait saillie depuis le segment de bande de roulement vers l'intérieur dans la direction radiale, qui pénètre dans la bande de roulement lors de la formation du pneu cru dans le moule de vulcanisation et qui définit par sa forme la configuration de l'entaille dans la bande de roulement du pneumatique, et la lamelle (1) présentant une épaisseur de 0,5 mm à 1,5 mm et étant fabriquée par fusion sélective au laser à partir d'une poudre métallique,
**caractérisée en ce**
**qu'**elle présente au moins une partie de lamelle (3) qui fait saillie depuis la partie de base (2) de la lamelle (1) en formant une intersection.

2. Lamelle (1) selon la revendication 1, **caractérisée en ce qu'**elle présente au moins une paire de parties de lamelle (3) qui forme une intersection avec la partie de base (2).

3. Lamelle (1) selon la revendication 1 ou 2, **caractérisée en ce qu'**elle présente une épaisseur variable.
